# EUROPÄISCHE PATENTANMELDUNG

(11) **EP 2 770 305 A1**
(43) Veröffentlichungstag der Anmeldung: **27.08.2014**
(21) Anmeldenummer: 14154235.7
(22) Anmeldetag: 07.02.2014
(51) Int. Cl.: G01F 1/66, G01F 15/14, G01F 5/00

(54) **Durchflussmesser mit einem Schallwandler umfassenden Messeinsatz**

(30) Priorität: 21.02.2013 DE 102013202850
(71) Anmelder: Landis+Gyr GmbH, 90459 Nürnberg (DE)
(72) Erfinder: Gölzhäuser, Thomas, 90480 Nürnberg (DE); Herold, Peter, 90459 Nürnberg (DE); Adler, Thomas, 90409 Nürnberg (DE); Fischer, Stefan, 91126 Schwabach (DE)
(74) Vertreter: Rau, Schneck & Hübner Patentanwälte Rechtsanwälte PartGmbB

(57) **Zusammenfassung**

Der Durchflussmesser (1) für ein flüssiges oder gasförmiges Medium (3) umfasst ein Gehäuse (2) und einen in das Gehäuse (2) einsetzbaren Messeinsatz (5). Der Messeinsatz (5) enthält als bauliche Einheit mindestens einen ersten Schallwandler (13) zum Senden eines ersten Schallsignals (15) in eine während des Betriebs von dem Medium (3) durchströmte Messstrecke (8) und einen zweiten Schallwandler (14) zum Empfangen des ersten Schallsignals (15) nach Durchlaufen der Messstrecke (8), die während des Betriebs und bei eingesetztem Messeinsatz (5) von dem Medium (3) durchströmte Messstrecke (8), mindestens eine Verschlussplatte (12), die eine Gehäuseöffnung (6) des Gehäuses (2), in das der Messeinsatz (5) einsetzbar ist, gegenüber einem Austritt des Mediums (3) abdichtend verschließt, und in die mindestens einer der beiden Schallwandler (13, 14) eingesetzt ist, sowie mindestens eine außenseitige Wandlerabdeckung (17), die mindestens einen der beiden Schallwandler (13, 14) auf einer von dem Medium (3) abgewandten Außenseite der Verschlussplatte (12) abdeckt. Zwischen der Wandlerabdeckung (17) und der Verschlussplatte (12) ist eine Dichtung angeordnet. Eine elektrische Zuleitung zu mindestens einem der beiden Schallwandler (13, 14) ist abgedichtet durch die Wandlerabdeckung (17) hindurchgeführt.

## Beschreibung

Die Erfindung betrifft einen Durchflussmesser für ein flüssiges oder gasförmiges Medium.

Derartige Durchflussmesser auf Grundlage der (Ultra-)Schallmesstechnik sind bekannt. Impulsförmige (Ultra-)Schallsignale werden mittels (Ultra-) Schallwandler erzeugt sowie in Flussrichtung und entgegen der Flussrichtung durch das Medium gesendet. Der Unterschied der Laufzeiten der Schallsignale in beiden Laufrichtungen wird zur Ermittlung der Durchflussmenge des Mediums ausgewertet. Derartige ultraschallbasierte Durchflussmesser arbeiten nach dem Laufzeitdifferenzprinzip.

Es gibt verschiedene Ausgestaltungen. Zum einen sind Einrichtungen bekannt, die Durchflussmesser im eigentlichen Sinne darstellen und ausschließlich die Durchflussmenge des Mediums ermitteln. Zum anderen gibt es auch Energiezähler, beispielsweise in Form von Wärme- und Kältezählern, bei denen die nach dem vorstehend erläuterten Prinzip ermittelte Durchflussmenge mit einer zusätzlich über ein Temperaturfühlerpaar ermittelten Temperaturdifferenz im Vor- und Rücklauf in Verbindung gebracht wird, um so die über das Medium zugeführte (Wärme- oder Kälte-) Energie zu bestimmen. Auch derartige Energiezähler sind hier als - speziell ausgestaltete - Durchflussmesser zu verstehen.

Das Schallsignal kann auf unterschiedlichen Laufwegen durch das zu erfassende Medium gesendet werden. Günstig ist es, wenn möglichst das komplette Durchflussprofil des Mediums erfasst wird. Um dies zu erreichen, wird in der EP 1 337 810 B1 ein Durchflussmesser beschrieben, bei dem ein schraubenförmiger Laufweg des Schallsignals durch das zu erfassende Medium vorgesehen ist. Das von dem Schallwandler ausgesendete Schallsignal erhält den schraubenförmigen Laufweg durch das Medium mittels Reflexionen an den Wänden des die Messstrecke umschließenden Messkanals.

Bekannt sind weitere Ausgestaltungen von Ultraschall-Durchflussmessern, die einen austauschbaren Messeinsatz aufweisen. So wird in der EP 0 890 826 B1 ein austauschbarer wannenförmiger Messeinsatz aus Kunststoff mit in spezielle Taschen eingebrachten Reflexionsscheiben beschrieben. Weiterhin wird in der EP 0 477 418 A1 ein Durchflussmesser mit einem Messeinsatz in Form einer wannenartigen Blechkonstruktion beschrieben. Auch der in der EP 2 006 646 A1 offenbarte Ultraschalldurchflussmesser hat einen austauschbaren Messeinsatz, bei dem die Schallwandler auf einander gegenüberliegenden Seiten der Messstrecke angeordnet sind. Die Austauschbarkeit der Messeinsätze erleichtert die Wartung und auch eine ggf. erforderliche Neueichung oder Neukalibrierung.

Obwohl bereits viele ultraschalbasierte Durchflussmesser bekannt sind, besteht weiterhin Bedarf an verbesserten Lösungen im Hinblick auf die Handhabung, Bedien-/Betriebssicherheit und/oder Messgenauigkeit derartiger Geräte.

Die Aufgabe der Erfindung besteht darin, einen Durchflussmesser der eingangs bezeichneten Art anzugeben, der gegenüber den bekannten Durchflussmessern weiter verbessert ist.

Zur Lösung dieser Aufgabe wird ein Durchflussmesser entsprechend den Merkmalen des Patentanspruchs 1 angegeben. Der erfindungsgemäße Durchflussmesser umfasst ein Gehäuse und einen in das Gehäuse einsetzbaren Messeinsatz, wobei der Messeinsatz als insbesondere mehrteilige bauliche Einheit mindestens einen ersten Schallwandler, insbesondere einen ersten Ultraschallwandler, zum Senden eines ersten Schallsignals in eine während des Betriebs von dem Medium durchströmte Messstrecke und einen zweiten Schallwandler, insbesondere einen zweiten Ultraschallwandler, zum Empfangen des ersten Schallsignals nach Durchlaufen der Messstrecke, die während des Betriebs und bei eingesetztem Messeinsatz von dem Medium durchströmte Messstrecke, mindestens eine Verschlussplatte, die eine Gehäuseöffnung des Gehäuses, in das der Messeinsatz einsetzbar ist, gegenüber einem Austritt des Mediums abdichtend verschließt, und in die mindestens einer der beiden Schallwandler eingesetzt ist, sowie mindestens eine außenseitige Wandlerabdeckung, die mindestens einen der beiden Schallwandler auf einer von dem Medium abgewandten Außenseite der Verschlussplatte, insbesondere abdichtend, abdeckt, enthält, wobei zwischen der Wandlerabdeckung und der Verschlussplatte eine Dichtung angeordnet ist, und eine elektrische Zuleitung zu mindestens einem der beiden Schallwandler abgedichtet durch die Wandlerabdeckung hindurchgeführt ist.

Es wurde erkannt, dass durch eine zusätzliche außenseitige Abdeckung der Schallwandler die Bedien-/Betriebssicherheit des Durchflussmessers weiter verbessert werden kann. Die auf der von dem Medium abgewandten Außenseite der Verschlussplatte vorgesehene Wandlerabdeckung schützt die Schlüsselkomponenten des (ultra-)schallbasierten Durchflussmessers, so dass die Fehleranfälligkeit des Geräts insgesamt erheblich reduziert wird.

Deshalb ist es auch günstig, dass zwischen der Wandlerabdeckung und der Verschlussplatte eine Dichtung angeordnet ist. Die so abgedichtete Wandlerabdeckung ist insbesondere dazu ausgelegt, den mindestens einen abgedeckten Schallwandler während des Betriebs vor äußeren Umgebungseinflüssen, wie z.B. vor Feuchtigkeit und/oder vor Strahlung, insbesondere vor elektromagnetischer Strahlung zur Verbesserung der EMV, zu schützen.

Ebenso ist es günstig, dass eine elektrische Zuleitung zu mindestens einem der beiden Schallwandler, und insbesondere die elektrischen Zuleitungen zu beiden Schallwandlern, abgedichtet durch die Wandlerabdeckung hindurchgeführt ist, bzw. sind, z.B. mittels einer abgedichteten Kabelverschraubung. Auch dies trägt dazu bei, dass der abgedeckte Schallwandler während des Betriebs vor äußeren Umgebungseinflüssen geschützt ist.

Die diesbezüglich maßgebliche Wandlerabdeckung kann dabei unterschiedlich ausgestaltet sein. Zum einen ist eine Ausführung als eine Abdeckplatte möglich. Alternativ kann aber auch ein insbesondere mehrteiliger Abdeckaufbau mit einer zumindest einen der Schallwandler insbesondere dicht abdeckenden Abdeckhaube und einer zusätzlichen Abdeckplatte vorgesehen sein. Weitere Ausgestaltungen sind ebenfalls möglich.

Auch für die Umsetzung der abgedeckten Schallwandler sind unterschiedliche Ausgestaltungen möglich. Insbesondere können die Schallwandler jeweils sowohl als Schallsender als auch als Schallempfänger ausgebildet sein. Es können somit beispielsweise impulsförmige Schallsignale in Durchflussrichtung und entgegen der Durchflussrichtung des Mediums in die Messstrecke eingespeist werden, so dass die Ermittlung der Durchflussmenge des Mediums anhand des Laufzeitdifferenzprinzips erfolgen kann. Neben dem ersten Schallsignal gibt es dann also auch ein zweites Schallsignal, das die Messstrecke, verglichen mit dem ersten Schallsignal, in entgegengesetzter Richtung durchläuft.

Bevorzugt bestehen abgesehen von den Schallwandlern und von etwaigen Dichtungen alle anderen Komponenten des Messeinsatzes aus dem gleichen Material. Dies erleichtert den Herstellungsaufwand und führt auch zu einem verbesserten Betriebsverhalten, da sich so die Verbindung der verschiedenen Bestandteile vereinfacht. Außerdem werden auf diese Weise auch z.B. temperaturbedingte mechanische Spannungen zwischen den einzelnen Bestandteilen, die sich andernfalls bei einer Herstellung aus verschiedenen Materialien ergeben können, vermieden.

Vorteilhafte Ausgestaltungen des erfindungsgemäßen Durchflussmessers ergeben sich aus den Merkmalen der von Anspruch 1 abhängigen Ansprüche.

Günstig ist eine Ausgestaltung, bei der die Wandlerabdeckung fest und insbesondere nur unter Zuhilfenahme von Werkzeug lösbar auf der Verschlussplatte befestigt ist. Die Wandlerabdeckung ist also insbesondere dazu ausgelegt, den mindestens einen abgedeckten Schallwandler bei in das Gehäuse eingesetztem Messeinsatz vor einem mechanischen Zugriff zu schützen. Auf diese Weise können Manipulationen am Schallwandler ausgeschlossen oder zumindest erheblich erschwert werden.

Gemäß einer weiteren günstigen Ausgestaltung ist für den ersten Schallwandler und für den zweiten Schallwandler eine gemeinsame Wandlerabdeckung vorgesehen. Dies ist insbesondere dann günstig, wenn die Schallwandler auf der gleichen Seite der Messtrecke und außerdem in räumlicher Nähe zueinander angeordnet sind. Dann ist es vorteilhaft, nur eine einzige Wandlerabdeckung für beide Schallwandler zu verwenden.

Gemäß einer alternativen Ausgestaltung ist es aber auch möglich, für den ersten Schallwandler und für den zweiten Schallwandler jeweils eine gesonderte Wandlerabdeckung vorzusehen. Dies ist insbesondere dann günstig, wenn die Schallwandler auf unterschiedlichen Seiten der Messtrecke oder räumlich weit voneinander beabstandet angeordnet sind. Dann ist es vorteilhaft, für jeden Schallwandler eine eigene Wandlerabdeckung zu verwenden.

Gemäß einer weiteren günstigen Ausgestaltung ist der Messeinsatz austauschbar in das Gehäuse einsetzbar. Dann kann der Messeinsatz sehr einfach entfernt werden, um beispielsweise eine Wartung und/oder eine Neueichung bzw. -kalibrierung vorzunehmen. Die Öffnung am Gehäuse, in die der Messeinsatz normalerweise eingesetzt ist, kann währenddessen mittels eines einfachen Deckels verschlossen werden. Alternativ kann auch ein baugleicher anderer Messeinsatz eingesetzt werden. Jedenfalls muss die Rohrleitung, durch die das Medium fließt, insbesondere höchstens während der kurzen Zeitspanne, die für den Wechsel des Messeinsatzes benötigt wird, still gelegt werden. Der ansonsten anfallende aufwändige Aus- und Wiedereinbau einer als Rohrkomponente ausgeführten Armatur erübrigt sich. Diese günstige Austauschbarkeit ergibt sich insbesondere dadurch, dass der Messeinsatz bevorzugt alle für den Betrieb des Durchflussmessers maßgeblichen Komponenten umfasst.

Gemäß einer weiteren günstigen Ausgestaltung ist das Gehäuse als ein separates Bauteil, beispielsweise als ein gesondertes Armaturengehäuse, zum Einbau in eine von dem Medium durchströmte Rohrleitung oder als integraler Teilbereich einer von dem Medium durchströmten Rohrleitung ausgebildet. Die Ausgestaltung als gesondertes Bauteil kann Vorteile hinsichtlich einer definierteren Einbaugeometrie bieten, wohingegen die Ausgestaltung als integraler Leitungsbestandteil platzsparender sein kann.

Gemäß einer weiteren günstigen Ausgestaltung hat die Messstrecke einen eigentlichen Messkanal mit einer Messkanal-Eintrittsöffnung für das Medium, mit einer Messkanal-Austrittsöffnung für das Medium und mit mindestens einer Messkanalwand, wobei die Messkanalwand die Messstrecke in Durchflussrichtung zumindest teilweise umgibt. Weiterhin hat das Gehäuse eine Gehäusewand, und bei eingesetztem Messeinsatz ist in einem Zwischenbereich zwischen der Messkanalwand und der Gehäusewand eine Verengungsstelle vorgesehen. Die Verengungsstelle ist dabei vorzugsweise zwischen einer Außenseite der Messkanalwand und einer Innenseite der Gehäusewand gebildet. Sie trägt dazu bei, dass das Medium primär durch die Messstrecke fließt und nur ein in Bezug auf die Durchflusserfassung messtechnisch vernachlässigbarer Anteil des Mediums als nicht erfassbare Passivströmung an der Messtrecke vorbeigeleitet wird. Dadurch erhöht sich die Messgenauigkeit des Durchflussmessers. Die Messkanalwand ist insbesondere stoffschlüssig mit der Verschlussplatte verbunden, z.B. angeschweißt oder angelötet. Grundsätzlich gibt es auch andere Möglichkeiten zur Verbindung der Messkanalwand und der Verschlussplatte. Insbesondere ist eine mechanisch stabile Verbindung zwischen diesen beiden Komponenten des Messeinsatzes vorgesehen.

Gemäß einer weiteren günstigen Ausgestaltung ist die Verengungsstelle durch einen insbesondere stegförmigen Vorsprung zumindest an der Messkanalwand oder an der Gehäusewand gebildet. Es kann auch an beiden Wänden jeweils ein Vorsprung vorgesehen sein, um die Verengungsstelle zu bilden. Ein solcher Vorsprung lässt sich einfach herstellen. Andererseits verengt oder verschließt er den Zwischenbereich zwischen der Gehäusewand und der Messkanalwand sehr wirkungsvoll. Zur Ausbildung der Verengungsstelle ist vorzugsweise kein gesondertes Bauteil, insbesondere keine zusätzliche Dichtung, erforderlich.

Gemäß einer weiteren günstigen Ausgestaltung ist zwischen der Messkanalwand und der Gehäusewand im Bereich der Verengungsstelle eine Restöffnung vorgesehen. Dann ist die Verengungsstelle einerseits insbesondere eng genug, um höchstens einen messtechnisch vernachlässigbaren Strömungsanteil als Passivströmung an der Messtrecke vorbeizuleiten. Andererseits verhindert die Restöffnung vorzugsweise die Ausbildung einer toten Zone mit stehendem Medium vor der Verengungsstelle. In dem stehenden Medium der toten Zone könnten sich andernfalls Bakterien bilden, was insbesondere bei einem Einsatz des Durchflussmessers in einer Trinkwasserleitung zu Problemen führen könnte.

Gemäß einer weiteren günstigen Ausgestaltung umgibt die Verengungsstelle die Messkanalwand insbesondere an deren Außenseite vollständig. Damit ist nirgendwo eine Vergrößerung des Öffnungsquerschnitts vorhanden, durch die ansonsten ggf. ein zu großer Anteil des Mediums als dann möglicherweise messtechnisch eben nicht mehr vernachlässigbare Passivströmung in den Zwischenbereich zwischen der Gehäusewand und der Messkanalwand hinein gelangen könnte.

Gemäß einer weiteren günstigen Ausgestaltung hat die Messstrecke einen eigentlichen Messkanal mit einer Messkanalwand, und ist zumindest die Messkanalwand aus oder mit einem Metall gefertigt. Dadurch ergibt sich ein sehr alterungsbeständiger und verschleißfreier Aufbau. Außerdem lassen sich durch eine metallische Messkanalwand ansonsten zur Ausbildung von Reflexionsstellen erforderliche Zusatzbauteile einsparen. Die Reflexion des/der Schallsignals/e kann dann nämlich unmittelbar an der metallischen Messkanalwand erfolgen.

Weitere Merkmale, Vorteile und Einzelheiten der Erfindung ergeben sich aus der nachfolgenden Beschreibung von Ausführungsbeispielen anhand der Zeichnung. Es zeigt:
- Fig. 1: ein erstes Ausführungsbeispiel eines Durchflussmessers mit einem austauschbar in ein Gehäuse einsetzbaren Messeinsatz umfassend abgedichtete Ultraschallwandler in einer Längsschnittdarstellung mit Ansicht von der Seite,
- Fig. 2: den Messeinsatz des Durchflussmessers gemäß Fig. 1 in einer vergrößerten Längsschnittdarstellung mit einer zur außenseitigen Abdichtung der Ultraschallwandler dienenden Abdeckplatte,
- Fig. 3: den Messeinsatz des Durchflussmessers gemäß Fig. 1 in einer Ansicht von vorne auf eine Messkanal-Eintrittsöffnung des Messeinsatzes, und
- Fig. 4: ein zweites Ausführungsbeispiel eines Durchflussmessers mit einem austauschbar in ein Gehäuse einsetzbaren Messeinsatz und einer Verengungsstelle zwischen einer Messkanalwand und einer Gehäusewand in einer Längsschnittdarstellung mit Draufsicht von oben.

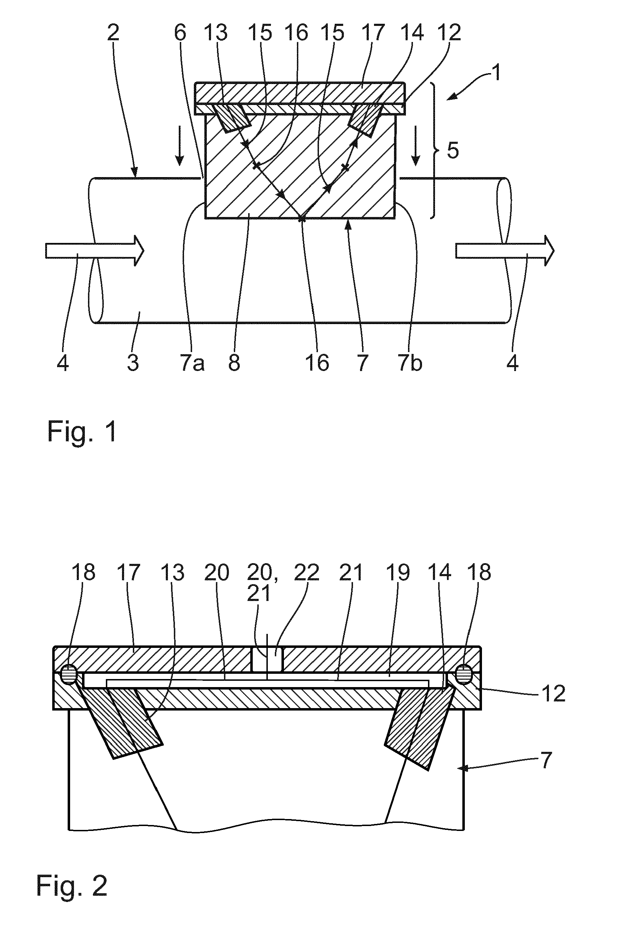

Einander entsprechende Teile sind in den Fig. 1 bis 4 mit denselben Bezugszeichen versehen. Auch Einzelheiten der im Folgenden näher erläuterten Ausführungsbeispiele können für sich genommen eine Erfindung darstellen oder Teil eines Erfindungsgegenstands sein.

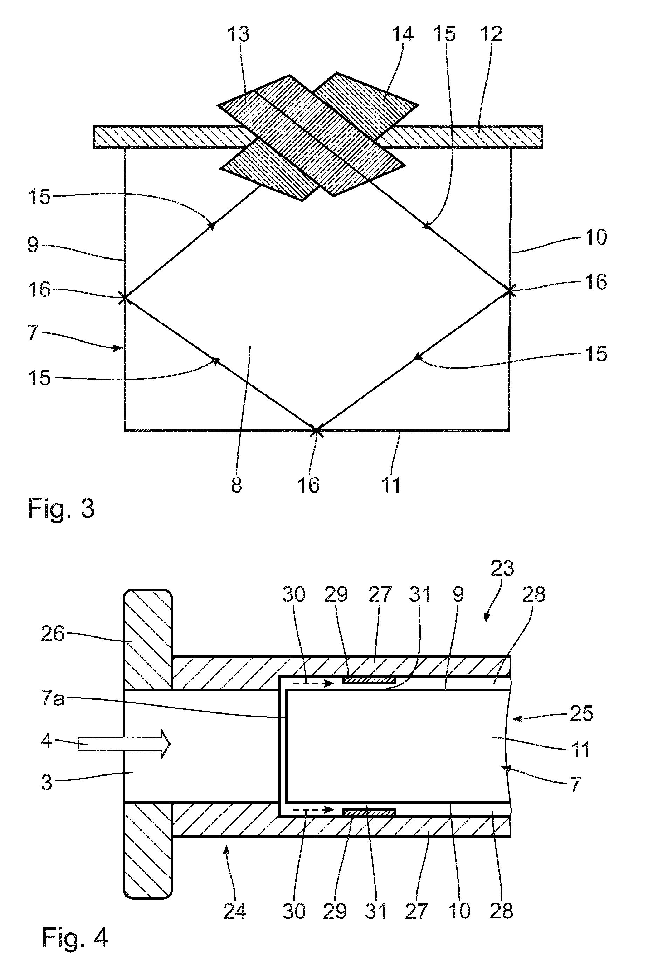

In Fig. 1 bis 3 ist ein Ausführungsbeispiel eines Durchflussmessers 1 zur Erfassung der Durchflussmenge eines durch ein Gehäuse 2 strömenden Mediums 3 dargestellt. Das Medium 3 durchströmt das Gehäuse 2 in der durch die Pfeile angedeuteten Durchflussrichtung 4. Das Gehäuse 2 ist bei dem gezeigten Ausführungsbeispiel als Rohrabschnitt eines von dem zu erfassenden Medium 3 durchflossenen Rohrleistungssystems ausgebildet. Grundsätzlich ist aber auch eine alternative Ausgestaltung in Form eines gesonderten Armaturengehäuses möglich, das gesondert in das Rohrleistungssystem eingebaut ist (siehe hierzu auch das nachfolgende Ausführungsbeispiel gemäß Fig. 4).

Der Durchflussmesser 1 ist ultraschallbasiert und beruht auf dem Laufzeitdifferenzprinzip. Das in Fig. 1 bis 3 gezeigte Ausführungsbeispiel ist zur Erfassung der Durchflussmenge des Mediums 3 ausgelegt. Dies ist allerdings nicht einschränkend zu verstehen. Der Durchflussmesser 1 kann nämlich grundsätzlich auch Bestandteil einer kombinierten Erfassungseinheit, beispielsweise zur Erfassung einer über das Rohrleistungssystem zugeführten Menge an Wärme- oder Kälteenergie sein. Dazu sind zwei in Fig. 1 nicht dargestellte zusätzliche Temperatursensoren zur Erfassung einer Temperaturdifferenz zwischen Vor- und Rücklauf vorgesehen. Ein so ausgebildeter Wärme- oder Kältezähler erfasst dann die über das in dem Rohrleistungssystem angelieferte und verbrauchte Wärme- oder KälteEnergie. Im Folgenden wird ohne Einschränkung der Allgemeingültigkeit nur auf die Erfassung der Durchflussmenge des Mediums 3 eingegangen. Der Durchflussmesser 1 umfasst einen austauschbaren Messeinsatz 5, der in eine Öffnung 6 des Gehäuses 2 einsetzbar ist. In Fig. 1 ist ein Zustand gezeigt, bei dem der Messeinsatz 5 nur teilweise in die Öffnung 6 eingesetzt ist und sich damit nicht in seiner endgültigen Einbaulage befindet.

Der Messeinsatz 5 umfasst einen Messkanal 7, der die eigentliche Messstrecke 8 in Form eines gebogenen Metallblechs umgibt. Der Messkanal 7 hat, wie aus der Frontansicht gemäß Fig. 3 ersichtlich, zwei Messkanalseitenwände 9 und 10 sowie eine Messkanalbodenwand 11. Außerdem hat der Messkanal 7 eine eingangsseitige Messkanal-Eintrittsöffnung 7a und eine ausgangsseitige Messkanal-Austrittsöffnung 7b (siehe Fig. 1).

Es können in Fig. 1 bis 3 nicht mit abgebildete mechanische oder anders ausgestaltete Mittel zur Sicherstellung einer korrekten Einbaulage des Messeinsatzes 5 im Gehäuse 2 vorgesehen sein. Der Messeinsatz 5 ist deshalb in Bezug auf die Durchflussrichtung 4 des Mediums 3 immer richtig orientiert eingebaut, so dass das Medium 3 durch die Messkanal-Eintrittsöffnung 7a in die Messstrecke 8 eintritt und die Messstrecke 8 durch die Messkanal-Austrittsöffnung 7b wieder verlässt. Bei einem nicht gezeigten alternativen Ausführungsbeispiel kann der Messeinsatz 5 auch drehbar, d.h. ohne Vorzugsorientierung 1 in Bezug auf die Durchflussrichtung 4, ausgestaltet sein. In dieser alternativen Ausgestaltung ist der Messeinsatz 5 sehr variabel und insbesondere in beide Flussrichtungen einsetzbar.

Die Messkanalseitenwände 9 und 10 sind stoffschlüssig mit einer Verschlussplatte 12 verbunden. Die Verschlussplatte 12 besteht ebenfalls aus einem Metall. Die Verbindung mit den Messkanalseitenwänden 9 und 10 ist bei dem gezeigten Ausführungsbeispiel mittels einer Schweißverbindung hergestellt. Diese Verbindung bietet eine mechanische Stabilität. Die Verschlussplatte 12 ist abgedichtet auf den Rand der Öffnung 6 des Gehäuses 2 aufgesetzt.

In die Verschlussplatte 12 sind zwei Ultraschallwandler 13 und 14 eingesetzt. Die Ultraschallwandler 13 und 14 sind bei dem gezeigten Ausführungsbeispiel in die Verschlussplatte 12 eingeschraubt, wobei zugleich eine Abdichtung gegenüber einem Durchtritt des Mediums 3 durch die Schraubverbindung vorgesehen ist. Die Ultraschallwandler 13 und 14 sind so orientiert, dass ein von ihnen erzeugtes oder empfangenes Schallsignal 15 unter einem schrägen Winkel zur Durchflussrichtung 4 ausgesendet bzw. empfangen wird (siehe in Fig. 1 dargestellten Weg des Schallsignals 15). Außerdem sind die Ultraschallwandler 13 und 14 auch schräg in Bezug auf die Orientierung der Seitenwände 9 und 10 ausgerichtet. Ihre Sende- bzw. Empfangscharakteristik weist jeweils auf eine der beiden Messkanalseitenwände 9 und 10 (siehe in Fig. 3 dargestellten Weg des Schallsignals 15). Es ergibt sich ein schraubenartiger Verlauf des Schallsignals 15 durch die Messstrecke 8 mit verschiedenen Reflexionsstellen 16 an den Messkanalseitenwänden 9 und 10 sowie an der Messkanalbodenwand 11. Da die Messkanalseiten/bodenwände 9, 10, 11 ohnehin aus Metall bestehen und deren - bei Bedarf polierte - Oberflächen somit sehr gute Reflexionseigenschaften für das Schallsignal 15 aufweisen, sind keine besonderen Maßnahmen zur Ausbildung der Reflexionsstellen 16 erforderlich.

Die Ultraschallwandler 13 und 14 sind jeweils sowohl zum Senden als auch zum Empfangen des Schallsignals 15 ausgelegt. Somit gibt es zwei Schallausbreitungsrichtungen, nämlich zum einen im Wesentlichen in Durchflussrichtung 4 und zum anderen im Wesentlichen entgegen der Durchflussrichtung 4. Aus der Laufzeitdifferenz dieser beiden entgegengesetzt orientierten Schallsignale 15 wird dann in einer nicht näher gezeigten Auswerteeinheit die Durchflussmenge des Mediums 3 ermittelt.

Die die Ultraschallwandler 13 und 14 aufnehmende Verschlussplatte 12 verschließt im eingebauten Zustand des Messeinsatzes 5 die Öffnung 6 des Gehäuses 2 vollständig und dicht. Die Verbindung ist fest aber lösbar, und beispielsweise mittels einer Schraubverbindung realisiert. Zusätzlich ist eine nicht näher gezeigte Dichtung vorgesehen, die einen Austritt des Mediums 3 verhindert.

Auf der von dem Medium 3 abgewandten Außenseite der Verschlussplatte 12 ist eine Abdeckplatte 17 ebenfalls lösbar auf der Verschlussplatte 12 angebracht. Im Verbindungsbereich zwischen den beiden Platten 12 und 17 ist eine weitere Dichtung 18 angeordnet, die einen zwischen den beiden Platten 12 und 17 gebildeten Innenbereich 19 gegen äußere Umgebungseinflüsse, wie beispielsweise Feuchtigkeitseinwirkung, abdichtet. Die Abdeckplatte 17 dient somit zur sicheren Abdeckung der Ultraschallwandler 13 und 14. Sie schützt die beiden Wandler 13 und 14 auch vor anderen Umgebungseinflüssen wie beispielsweise vor elektromagnetischer Strahlung und verbessert damit das EMV-Verhalten des Durchflussmessers 1. Darüber hinaus schützt die Abdeckplatte 17 die Ultraschallwandler 13 und 14 vor einem mechanischen Zugriff von außen, womit eine unerwünschte Beschädigung und/oder Manipulation der Ultraschallwandler 13 und 14 verhindert oder zumindest erheblich erschwert wird. Ein Zugang zu den Ultraschallwandlern 13 und 14 ist nur durch Entfernen der Abdeckplatte 17 möglich, wozu aber insbesondere Werkzeug benötigt wird.

Die Ultraschallwandler 13 und 14 ragen mit ihren elektrischen Anschlussseiten in den geschützten Innenbereich 19. Elektrische Zuleitungen 20 und 21 der Ultraschallwandler 13 bzw. 14 sind mittels einer abgedichteten Durchführung 22, die bei dem gezeigten Ausführungsbeispiel als Kabelverschraubung ausgeführt ist, durch die Abdeckplatte 17 geführt (siehe Fig. 2).

Der Durchflussmesser 1 hat also einen sehr vorteilhaften austauschbaren Messeinsatz 5, der mehrteilig aufgebaut ist und als Bestandteile den Messkanal 7, die Verschlussplatte 12, die darin eingesetzten Ultraschallwandler 13 und 14, die Abdeckplatte 17 sowie diverse Dichtungen umfasst. Der Messeinsatz 5 lässt sich als bauliche Einheit komplett aus dem Gehäuse 1 entnehmen, beispielsweise zu Wartungs- oder Kabilibrierungs-/Eichungszwecken. Der Messeinsatz 5 umfasst alle für die Messung maßgeblichen Komponenten, so dass gerade eine Kalibrierung oder Eichung auch außerhalb des Gehäuses 2 und vor allem in einer dafür besonders ausgebildeten Einrichtung vorgenommen werden kann. Das Gehäuse 2 kann solange an seinem Einsatzort bleiben. Das Rohrleitungssystem, in dem der Durchflussmesser 1 eingebaut ist, kann nach einem behelfsweisen Verschließen der Öffnung 6, z.B. mittels eines Deckels, vorteilhafterweise während der an dem entnommenen Messeinsatz 5 durchzuführenden Arbeiten weiterhin in Betrieb bleiben.

Ein weiterer Vorteil liegt in dem robusten Aufbau des Messeinsatzes 5. Die Ultraschallwandler 13 und 14 sind durch die Abdeckplatte 17 vor Umgebungseinflüssen und auch vor einem etwaigen manipulativen Zugriff geschützt.

Insgesamt bietet der Durchflussmesser 1 vor allem aufgrund des Messeinsatzes 5 während des Betriebes sowie während der Wartung und der Neukalibrierung/Neueichung Vorteile.

In Fig. 4 ist ein weiteres Ausführungsbeispiel eines Durchflussmessers 23 gezeigt. Der Durchflussmesser 23 umfasst ein gesondertes Armaturengehäuse 24, in das wiederum ein austauschbarer Messeinsatz 25 eingesetzt ist. Der in Fig. 4 nur schematisch angedeutete Messeinsatz 25 ist im Wesentlichen wie der Messeinsatz 5 des Durchflussmessers 1 gemäß den Fig. 1 bis 3 ausgebildet. Insofern wird auf die diesbezüglichen Ausführungen zu dem Messeinsatz 5 verwiesen. Auch der Messeinsatz 25 hat einen Messkanal 7 mit einer eingangsseitigen Messkanal-Eintrittsöffnung 7a, einer ausgangsseitigen Messkanal-Austrittsöffnung 7b sowie Messkanalseiten/bodenwänden 9, 10, 11.

Das Armaturengehäuse 24 ist, wie bereits vorstehend ausgeführt, zu einem gesonderten Einbau in ein Rohrleistungssystem ausgelegt. Hierzu sind an den beiden Anschlussstellen Flanschelemente 26 vorgesehen. Außerdem hat das Armaturengehäuse 24 eine Gehäusewand 27. Zwischen einer Außenseite der Messkanalseiten/bodenwände 9, 10, 11 und einer Innenseite der Gehäusewand 27 ist bei eingesetztem Messeinsatz 25 ein schmaler Zwischenbereich 28 gebildet. Dieser Zwischenbereich 28 wird durch eine den Messkanal 7 vollständig umgebende Verengungsstelle 29 im Wesentlichen verschlossen, so dass praktisch kein Teil des zu erfassenden Mediums 3 an der innerhalb des Messkanals 7 liegenden Messstrecke 8 vorbeigeleitet wird. Die bei dem gezeigten Ausführungsbeispiel durch einen umlaufenden stegartigen Vorsprung an der Gehäusewand 27 gebildete Verengungsstelle 29 ist so eng, dass nur eine messtechnisch vernachlässigbare Passivströmung 30 des Mediums 3 durch den schmalen Zwischenbereich 28 fließt. Im Bereich der Verengungsstelle 29 kommen sich die Gehäusewand 27 einerseits und die Messkanalseiten/bodenwände 9, 10, 11 andererseits einander sehr nahe, wobei aber noch eine Restöffnung 31 bleibt. Dadurch wird der Zwischenbereich 28 vorzugsweise einerseits soweit verschlossen, dass ein als Passivströmung 30 an der Messstrecke 8 vorbeigeleiteter Anteil des Mediums 3 messtechnisch in Bezug auf die Erfassung der Durchflussmenge irrelevant ist. Andererseits ist die Restöffnung aber insbesondere noch groß genug, um eine kleine Passivströmung 30 zu gewährleisten und so zu verhindern, dass sich vor der Verengungsstelle 29 eine bezüglich Bakterienbildung anfällige tote Zone mit stehendem Medium 3 bildet. Für die Ausbildung der Verengungsstelle 29 sind insbesondere keine zusätzlichen aufwändigen Abdichtungsmittel erforderlich. Die durch den stegartigen Vorsprung der Gehäusewand 27 gebildete Verengungsstelle 29 reicht insofern vollkommen aus. Ergänzend oder alternativ kann zur Bildung der Verengungsstelle 29 auch an der Außenseite der Messkanalseiten/bodenwände 9, 10, 11 ein stegartiger Vorsprung vorgesehen sein.

Aufgrund der Verengungsstelle 29 kann die Messgenauigkeit des Durchflussmessers 23 weiter verbessert werden, da Messfehler aufgrund von an der eigentlichen Messstrecke 8 vorbeigeleiteten zu großen Passivströmungen 30 des Mediums 3 praktisch unterbunden werden. Die auftretende Passivströmung 30 liegt nur in einer messtechnisch nicht maßgeblichen Größenordnung.

## Patentansprüche

1. Durchflussmesser für ein flüssiges oder gasförmiges Medium (3) umfassend ein Gehäuse (2; 24) und einen in das Gehäuse (2; 24) einsetzbaren Messeinsatz (5; 25), wobei der Messeinsatz (5; 25) als bauliche Einheit mindestens
a) einen ersten Schallwandler (13) zum Senden eines ersten Schallsignals (15) in eine während des Betriebs von dem Medium (3) durchströmte Messstrecke (8) und einen zweiten Schallwandler (14) zum Empfangen des ersten Schallsignals (15) nach Durchlaufen der Messstrecke (8),
b) die während des Betriebs und bei eingesetztem Messeinsatz (5; 25) von dem Medium (3) durchströmte Messstrecke (8),
c) mindestens eine Verschlussplatte (12), die eine Gehäuseöffnung (6) des Gehäuses (2; 24), in das der Messeinsatz (5; 25) einsetzbar ist, gegenüber einem Austritt des Mediums (3) abdichtend verschließt, und in die mindestens einer der beiden Schallwandler (13, 14) eingesetzt ist, sowie
d) mindestens eine außenseitige Wandlerabdeckung (17), die mindestens einen der beiden Schallwandler (13, 14) auf einer von dem Medium (3) abgewandten Außenseite der Verschlussplatte (12) abdeckt, enthält, wobei
e) zwischen der Wandlerabdeckung (17) und der Verschlussplatte (12) eine Dichtung (18) angeordnet ist, und eine elektrische Zuleitung (20, 21) zu mindestens einem der beiden Schallwandler (13, 14) abgedichtet durch die Wandlerabdeckung (17) hindurchgeführt ist.

2. Durchflussmesser nach Anspruch 1, **dadurch gekennzeichnet, dass** die Wandlerabdeckung (17) fest und insbesondere nur unter Zuhilfenahme von Werkzeug lösbar auf der Verschlussplatte (12) befestigt ist.

3. Durchflussmesser nach einem der vorhergehenden Ansprüche, **dadurch gekennzeichnet, dass** für den ersten Schallwandler (13) und für den zweiten Schallwandler (14) eine gemeinsame Wandlerabdeckung (17) vorgesehen ist.

4. Durchflussmesser nach einem der Ansprüche 1 und 2, **dadurch gekennzeichnet, dass** für den ersten Schallwandler (13) und für den zweiten Schallwandler (14) jeweils eine gesonderte Wandlerabdeckung vorgesehen ist.

5. Durchflussmesser nach einem der vorhergehenden Ansprüche, **dadurch gekennzeichnet, dass** der Messeinsatz (5; 25) austauschbar in das Gehäuse (2; 24) einsetzbar ist.

6. Durchflussmesser nach einem der vorhergehenden Ansprüche, **dadurch gekennzeichnet, dass** das Gehäuse als ein separates Bauteil (24) zum Einbau in eine von dem Medium (3) durchströmte Rohrleitung oder als integraler Teilbereich (2) einer von dem Medium (3) durchströmten Rohrleitung ausgebildet ist.

7. Durchflussmesser nach einem der vorhergehenden Ansprüche, **dadurch gekennzeichnet, dass** die Messstrecke (8) einen eigentlichen Messkanal (7) mit einer Messkanal-Eintrittsöffnung (7a) für das Medium (3), mit einer Messkanal-Austrittsöffnung (7b) für das Medium (3) und mit mindestens einer Messkanalwand (9, 10, 11) hat, wobei die Messkanalwand (9, 10, 11) die Messstrecke (8) in Durchflussrichtung (4) zumindest teilweise umgibt, und das Gehäuse (2; 24) eine Gehäusewand (27) hat, und bei eingesetztem Messeinsatz (5; 25) in einem Zwischenbereich (28) zwischen der Messkanalwand (9, 10, 11) und der Gehäusewand (27) eine Verengungsstelle (29) vorgesehen ist.

8. Durchflussmesser nach Anspruch 7, **dadurch gekennzeichnet, dass** die Verengungsstelle (29) durch einen Vorsprung zumindest an der Messkanalwand (9, 10, 11) oder an der Gehäusewand (27) gebildet ist.

9. Durchflussmesser nach Anspruch 7 oder 8, **dadurch gekennzeichnet, dass** zwischen der Messkanalwand (9, 10, 11) und der Gehäusewand (27) im Bereich der Verengungsstelle (29) eine Restöffnung (31) vorgesehen ist.

10. Durchflussmesser nach einem der Ansprüche 7 bis 9, **dadurch gekennzeichnet, dass** die Verengungsstelle (29) die Messkanalwand (9, 10, 11) vollständig umgibt.

11. Durchflussmesser nach einem der vorhergehenden Ansprüche, **dadurch gekennzeichnet, dass** die Messstrecke (8) einen eigentlichen Messkanal (7) mit einer Messkanalwand (9, 10, 11) hat, und zumindest die Messkanalwand (9, 10, 11) aus oder mit einem Metall gefertigt ist.
